# EUROPEAN PATENT SPECIFICATION

(11) **EP 4 286 187 B1**
(45) Date of publication and mention of the grant of the patent: **08.04.2026**
(21) Application number: 21921751.0
(22) Date of filing: 27.01.2021
(51) Int. Cl.: B60J 5/04, B60J 10/30, B60J 10/78, B60J 10/79

(54) **SEALING STRIP STRUCTURE AND SEALING DEVICE**
DICHTLEISTENSTRUKTUR UND DICHTEINRICHTUNG
STRUCTURE DE BANDE DE SCELLEMENT ÉTANCHE ET DISPOSITIF DE SCELLEMENT ÉTANCHE

(43) Date of publication of application: 06.12.2023
(73) Proprietor: Zhejiang Smart Intelligence Technology Co., Ltd., Ningbo, Zhejiang 315336 (CN)
(72) Inventor: ZHENG, Yiqi, Hangzhou Bay New District, Ningbo, Zhejiang 315336 (CN); SHU, Pingping, Hangzhou Bay New District, Ningbo, Zhejiang 315336 (CN); FU, Qiang, Hangzhou Bay New District, Ningbo, Zhejiang 315336 (CN); LIU, Yong, Hangzhou Bay New District, Ningbo, Zhejiang 315336 (CN)
(74) Representative: Zaboliene, Reda
(86) International application number: PCT/CN2021/073988
(87) International publication number: WO 2022/160131

(56) References cited:
- EP-A2- 1 316 456
- WO-A1-2020/254201
- CN-A- 102 574 446
- CN-A- 107 548 364
- CN-A- 110 370 899
- US-A1- 2009 223 135
- US-A1- 2018 141 421
- US-A1- 2019 315 214

## Description

### TECHNICAL FIELD

The present invention relates to the field of vehicle structures, and in particular, to a sealing strip structure and a sealing device.

### BACKGROUND

In the prior art, current manners of frameless door sealing strip structures are mainly divided into two types: integral and split. Japanese cars, and Volkswagen and Audi cars in European series choose the integral scheme, while Mercedes Benz and BMW in European series choose the split scheme. An integral frameless door sealing system has a relatively small quantity of parts and good integrity, however, the numbers of sections and corners are too large, the structural process is relatively complex; the cost of corners accounting for a relatively high proportion results in higher cost; a B-pillar bracket is additionally added, while the bracket and the corners cannot be generalized due to effect of the size and the shape of the entire vehicle. A split frameless door sealing system has fewer sections and corners, the structural process is relatively simple, and the cost is lower than that of the integral type; single pieces are relatively simple, and manufacturability is better.

A frameless door sealing system has a complex structure and high coordination difficulty. When designing, it is necessary to fully consider factors such as a water blocking path, a drainage path, closing force, closing sound, NVH, etc; in addition, considering factors such as design and manufacturing, it is also necessary to ensure the integrity of the sealing system and the universality of cross-sections as much as possible.

Models with C-pillar corner windows will cause a black edge of a corner window to be too large at a C-pillar, which will be reflected in a visual sense as an opaque area becoming larger between rear door glass and corner window glass when viewed from outside and inside of the vehicle. From an aesthetic perspective, a visible area should be maximized as much as possible, so a C-pillar free body structure may be adopted to reduce the opaque area. However, models without C-pillars may result in a section of the rear door opening sealing strip not being clamped and supported.

At present, most models have structures with C-pillars, and a few models (such as Volkswagen CC) that use integral frameless door sealing strips may adopt the C-pillar free scheme; since a split frameless door sealing system is split into multiple individual components, a C-pillar width is relatively wide, and the visual effect is poor, there is currently no solution of a split frameless door sealing system without a C-pillar.

Therefore, it is necessary to provide a solution of a split frameless door sealing system without a C-pillar.

In a reference document D1 (US2019/0315214A1), the automobile door sash structure includes a mall assembly body including a mall and a run channel which are assembled into a single unit. The run channel includes: an inner wall part which forms the inner wall of a rail part in collaboration with a window frame main body; and a bottom part which forms a bottom portion of the rail part in collaboration with the window frame main body. A total dimension of a dimension of the inner wall part in a frame inside-outside direction and a dimension of the bottom part in a vehicle inside-outside direction is set longer than a dimension of the window frame main body in the frame inside-outside direction.

### SUMMARY OF THE DISCLOSURE

In order to provide a solution of a split frameless door sealing system without a C-pillar, the present invention provides a sealing strip structure and a sealing device. The present invention is specifically implemented by the following technical solutions.

The invention is set out in the appended set of claims.

The sealing strip structure provided by the present invention can be connected to glass through a guide rail and an injection molded element, the sealing strip structure needs not to be connected to body sheet metal, and can be applied to body sheet metal without a C-pillar; when using the sealing strip structure of the present invention, a visible width at a C-pillar is less than or equal to 50mm, the width is small and the visual effect is good.

### BRIEF DESCRIPTION OF THE DRAWINGS

In order to explain technical solutions of embodiments of the present invention or in the prior art more clearly, drawings required to be used in description of the embodiments or of the prior art will be briefly introduced below. It is obvious that the drawings in the following description are only some embodiments of the present invention. For those skilled in the art, other drawings can be obtained according to these drawings on the premise of paying no creative work.
FIG. 1 is a schematic view of a body sheet metal structure with a C-pillar in the prior art.
FIG. 2 is a schematic view of a body sheet metal structure without a C-pillar in the prior art.
FIG. 3 is a schematic view of a connecting structure among a sealing strip, vehicle window glass, an injection molded element, and sheet metal in the prior art.
FIG. 4 is a partially structural schematic view of a sealing strip in the prior art.
FIG. 5 is a schematic view of mounting a sealing strip structure provided by the present invention.
FIG. 6 is a schematic view of a cross-sectional structure of the first sealing strip in FIG. 5 at the position A-A.
FIG. 7 is a schematic view of a connecting structure among the first sealing strip, a guide rail, vehicle window glass, and an injection molded element.
FIG. 8 is a structural schematic view of the guide rail.
FIG. 9 is a schematic view of a cross-sectional structure of a second sealing strip in FIG. 5 at the position B-B.
FIG. 10 is a schematic view of a connecting structure among the second sealing strip, a third sealing strip, the vehicle window glass, the injection molded element, and sheet metal.
FIG. 11 is an effect view of a visible area in a vehicle after using body sheet metal with a C-pillar structure.
FIG. 12 is an effect view of a visible area in a vehicle after using body sheet metal without a C-pillar structure.

### DETAILED DESCRIPTION

The technical solutions in the embodiments of the present invention will be described clearly and completely below in combination with the drawings in the embodiments of the present invention. Obviously, the described embodiments are merely some embodiments of the present invention, rather than all embodiments.

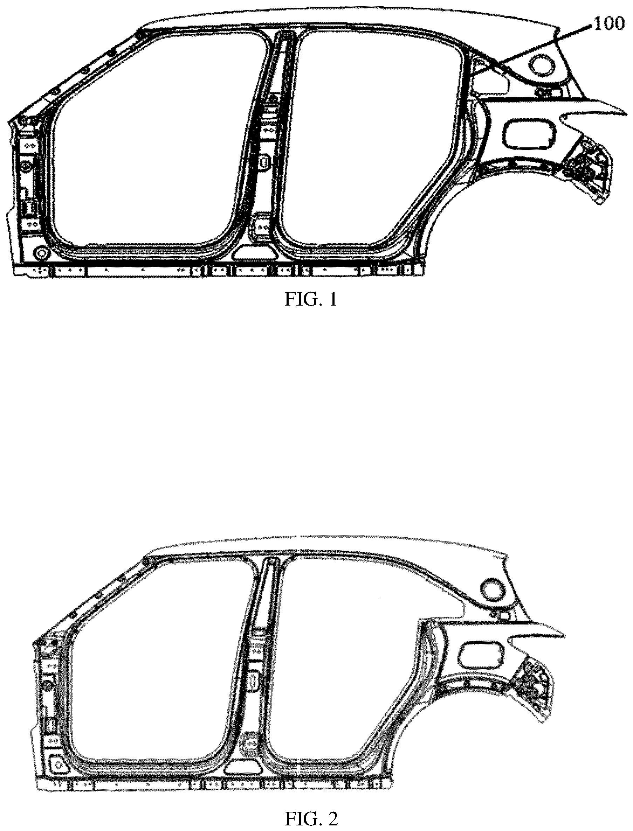

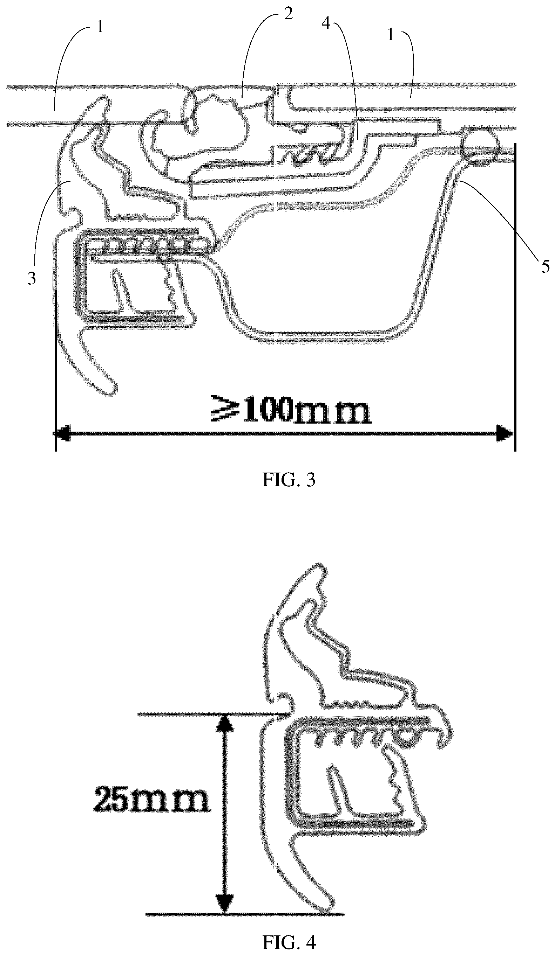

In the prior art, body sheet metal 5 with a C-pillar structure 100 is as shown in FIG. 1, and body sheet metal without a C-pillar is as shwon in FIG. 2. A sealing structure in the prior art is as shown in FIG. 3 and FIG. 4 and is applied to a body sheet metal with a C-pillar; wherein a sealing strip includes a first part 2 and a second part 3, the first part 2 is not connected with the second part 3, the first part 2 abuts against glass 1 and the first part 2 is further connected to the injection molded element 4, the second part 3 also abuts against the glass 1 and the second part 3 is further snap-fitted to the sheet metal 5. Based on FIG. 3, it can be known that the sealing structure in the prior art results in a visible width of the C-pillar being greater than or equal to 100mm, the width is wide, and the visual effect is poor. Based on FIG. 4, it can be known that the sealing structure in the prior art results in an appearance with an exposed black edge of which a width is 25mm, the width is wide, and the visual effect is poor.

In order to provide a solution of a split frameless door sealing system without a C-pillar, the present invention provides a sealing strip structure and a sealing device. The present invention is specifically implemented by the following technical solutions.

### Embodiment 1

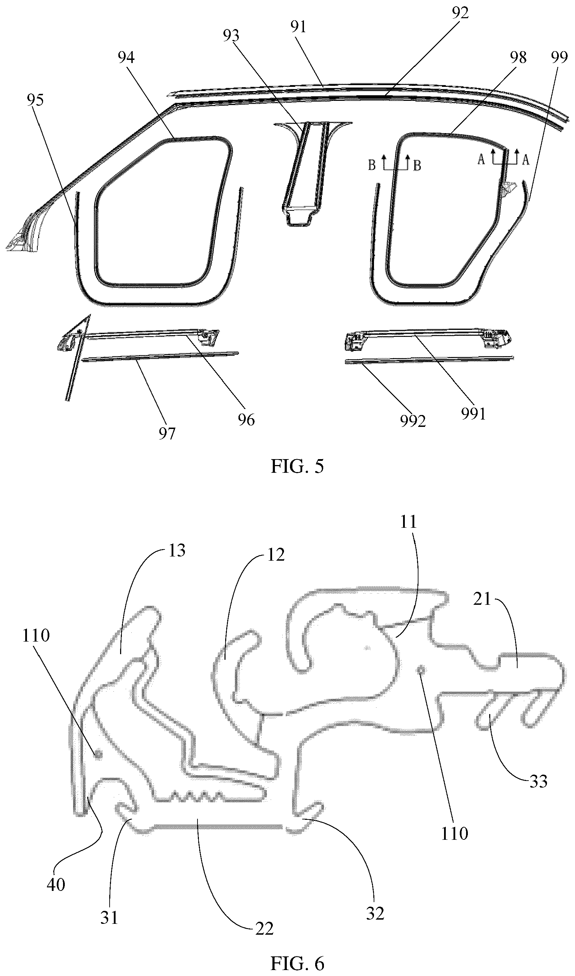

In combination with FIG. 5 to FIG. 12, a sealing strip structure in the embodiment 1 includes a first sealing strip, the first sealing strip comprises a first stop portion 11, a second stop portion 12, a third stop portion 13, a first snap-fit portion 21, and a second snap-fit portion 22; the first stop portion 11, the second stop portion 12, and the third stop portion 13 are all configured to abut against vehicle window glass 70; the first stop portion 11 is connected to the second stop portion 12, the first snap-fit portion 21 is connected to the first stop portion 11, and the first snap-fit portion 21 is configured to be connected to an injection molded element 60 and a guide rail 50; the second snap-fit portion 22 is respectively connected to the second stop portion 12 and the third stop portion 13, the second snap-fit portion 22 is configured to be snap-fitted to the guide rail 50, and the first stop portion 11 is further configured to abut against the guide rail 50.

The embodiment 1 is applied to body sheet metal without a C-pillar. The first sealing strip can be mounted at a position corresponding to a C-pillar. Since there is no sheet metal 5 at the position corresponding to a C-pillar, in the embodiment 1, the second snap-fit portion 22 is snap-fitted to the guide rail 50, the guide rail 50 is connected to the injection molded element 60, so that the first sealing strip is mounted on the body sheet metal without a C-pillar. The second snap-fit portion 22 is connected to the second stop portion 12, so that the first sealing strip form a whole to facilitate assembly.

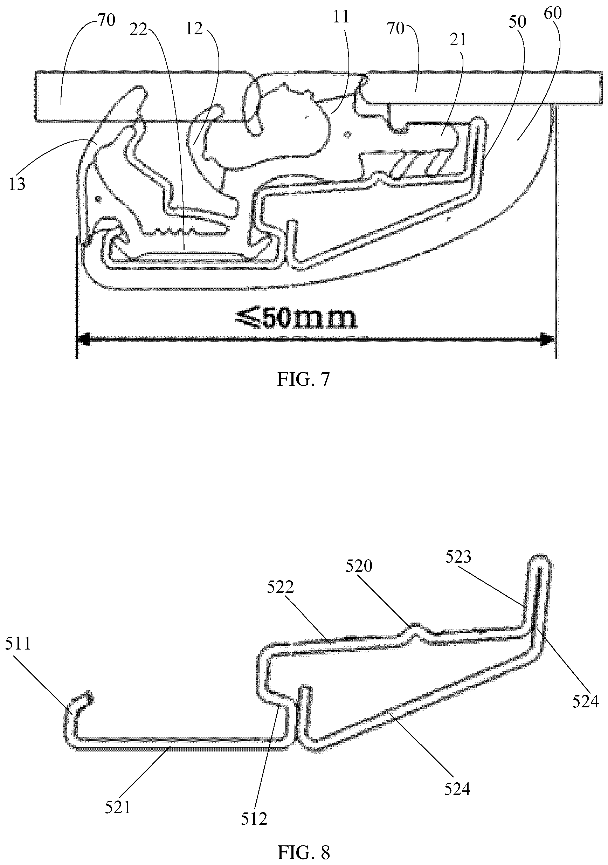

The sealing strip structure provided by the embodiment 1 can be connected to glass through the guide rail 50 and the injection molded element 60, and the sealing strip structure needs not to be connected to the body sheet metal 5. The sealing strip structure provided by the embodiment 1 can be applied to body sheet metal without a C-pillar. Based on FIG. 7, it can be known that a visible width of the position corresponding to a C-pillar is less than or equal to 50mm when using the sealing strip structure in the embodiment 1, the width is small, and the visual effect is good.

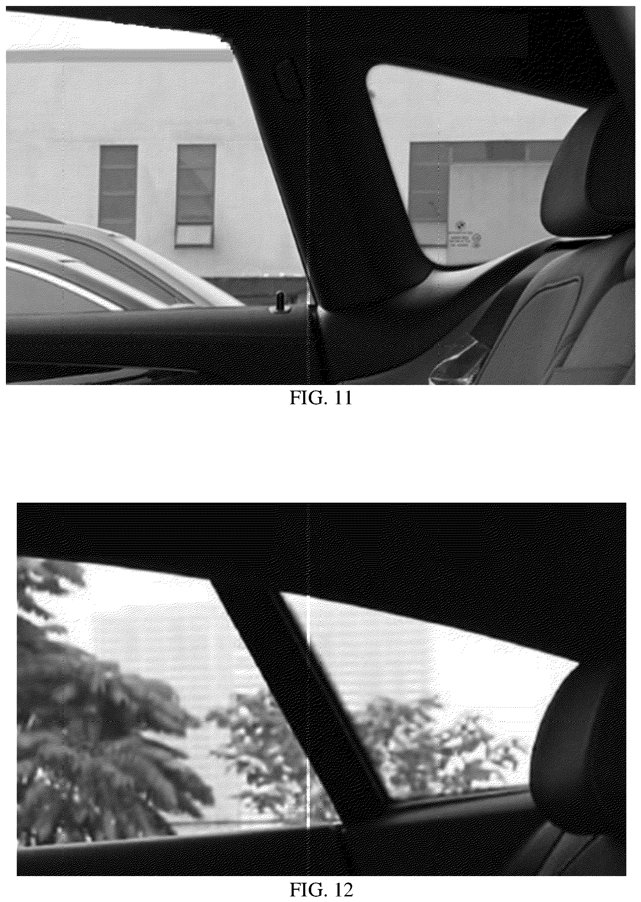

An effect view of a visible area in a vehicle using body sheet metal with a C-pillar structure in the prior art is as shown in FIG. 11. When the embodiment 1 is applied to body sheet metal without a C-pillar structure, an effect view of a visible area in a vehicle at a position corresponding to a C-pillar is as shown in FIG. 12. Based on comparison between FIG. 11 and FIG. 12, it can be known that after using the embodiment 1, an area of a visible area can be obviously increased, and visual effect of the visible area is optimized.

Furthermore, a first side of the second snap-fit portion 22 is provided with a first bump 31, a second side of the second snap-fit portion 22 is provided with a second bump 32, the first side of the second snap-fit portion 22 and the second side of the second snap-fit portion 22 are arranged oppositely, and the first bump 31 and the second bump 32 are respectively configured to be snap-fitted to the guide rail 50.

The second snap-fit portion 22 in the embodiment 1 is snap-fitted to the guide rail 50 through the first bump 31 and the second bump 32.

Furthermore, the first side of the second snap-fit portion 22 is further provided with a recess groove 40, the recess groove 40 is configured to receive an end of the guide rail 50.

In the embodiment 1, the first bump 31 is snap-fitted to the end of the guide rail 50. After the first bump 31 is snap-fitted to the end of the guide rail 50, the end of the guide rail 50 can be received in the recess groove 40, thereby avoiding position interference between the sealing strip and the guide rail 50.

Furthermore, the first snap-fit portion 21 is provided with a third bump 33, the third bump 33 is configured to be snap-fitted to the guide rail 50. The first snap-fit portion 21 in the embodiment 1 is snap-fitted to the guide rail 50 through the third bump 33.

In the embodiment 1, there is transverse snap-fitting between the third bump 33 and the guide rail 50, so that the first sealing strip is limited relative to the guide rail 50 in a transverse direction; there is longitudinal snap-fitting among the first bump 31, the second bump 32, and the guide rail 50, so that the first sealing strip is limited relative to the guide rail 50 in a longitudinal direction.

In the embodiment 1, a hardness of the second stop portion 12, a hardness of the third stop portion 13, and a hardness of the third bump 32 are all less than a hardness of the first snap portion 21 and a hardness of the second snap portion 22. The second stop portion 12, the third stop portion 13, and the third bump 33 are made of soft glue, and the first snap-fit portion 21 and the second snap-fit portion 22 are made of hard glue. In the embodiment 1, both the first stop portion 11 and the third stop portion 13 are provided with anti-shrinkage fiberglass 110.

Furthermore, a second sealing strip is further included; the second sealing strip comprises a fourth stop portion 14, a third snap-fit portion 23, and a fourth snap-fit portion 24, the fourth snap-fit portion 14 is configured to abut against the vehicle window glass 70, the third snap-fit portion 23 is provided with a snap-fit slot 230, the snap-fit slot 230 is configured to be snap-fitted to the sheet metal 5; an opening of the snap-fit slot 230 is located at a first side of the third snap-fit portion 23, the fourth snap-fit portion 24 is connected to a second side of the third snap-fit portion 23 and bent towards the second side of the third snap-fit portion 23, a snap-fit cavity 40 is formed between the second side of the third snap-fit portion 23 and the fourth snap-fit portion 24, the snap-fit cavity 40 is configured to be snap-fit to an interior panel.

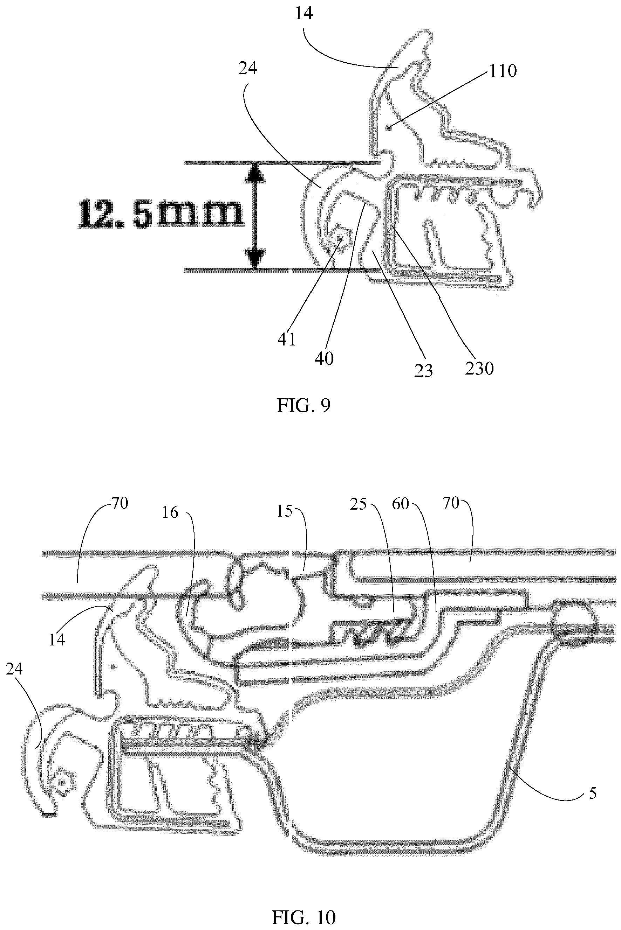

In the embodiment 1, the second sealing strip can be mounted at door opening sealing positions other than a C-pillar and connected to the sheet metal 5, and the third snap-fit portion 23 is snap-fitted to the sheet metal 5 through the snap-fit slot 230. The fourth snap-fit portion 24 is connected to the second side of the third snap-fit portion 23 and bent towards the second side of the third snap-fit portion 23, the snap-fit cavity 40 is formed between the second side of the third snap-fit portion 23 and the fourth snap-fit portion 24, an interior panel is clamped in the snap-fit cavity 40. Based on FIG. 9, it can be known that after using the sealing strip structure in the embodiment 1, a width of an exposed black edge in appearance is 12.5mm, the width is small and the visual effect is good. In the embodiment 1, the fourth stop portion 14 is provided with the anti-shrinkage fiberglass 110.

In the embodiment 1, the third snap-fit portion 23 is further provided with an assembly cable 41, the assembly cable 41 is configured for assembly, and the third snap-fit portion 23 can be pulled out through the assembly cable 41 and attached to the interior panel.

Furthermore, a third sealing strip is further included; the third sealing strip comprises a fifth stop portion 15, a sixth stop portion 16, and a fifth snap-fit portion 25; the fifth stop portion 15 is connected to the sixth stop portion 16, both the fifth stop portion 15 and the sixth stop portion 16 are configured to abut against the vehicle window glass 70; the fifth snap-fit portion 25 is connected to the fifth stop portion 15, the fifth snap-fit portion 25 is configured to be connected to the injection molded element 60, and the fifth stop portion 15 is further configured to abut against the injection molded element 60.

In the embodiment 1, both the third sealing strip and the second sealing strip can be mounted at door opening sealing positions other than a C-pillar, and there is no direct connection between the third sealing strip and the second sealing strip.

Furthermore, a first end of the first sealing strip is respectively connected to a first end of the second sealing strip and a first end of the third sealing strip; a second end of the first sealing strip is respectively connected to a second end of the second sealing strip and a second end of the third sealing strip.

During machining processes for the sealing strips, each irregular sealing strip material can be individually manufactured and formed, and then two sealing strip materials are connected through a corner mold so as to form a corner between the two sealing strip materials. Therefore, the sealing strip structure provided in the embodiment 1 can be formed as a whole, the first sealing strip is mounted and used at a position corresponding to a C-pillar, a cross-sectional structure of the first sealing strip is the cross-sectional structure at the position A-A in FIG. 5; the second strip and the third sealing strip are mounted and used in other parts other than the C-pillar, a cross-sectional structure of the second sealing strip is the cross-sectional structure at the position B-B in FIG. 5.

The sealing strip structure provided by the embodiment 1 is a rear door opening sealing strip 98. Furthermore, a vehicle body is further provided with a side wall decorative strip 91, an upper side wall sealing strip 92, a B-pillar decorative panel sealing strip 93, a front door opening sealing strip 94, a front headroom sealing strip 95, a front inner water cut sealing strip 96, a front outer water cut sealing strip 97, a rear headroom sealing strip 99, a rear inner water cut sealing strip 991, and a rear outer water cut sealing strip 992; the side wall decorative strip 91, the upper side wall sealing strip 92, the B-pillar decorative panel sealing strip 93, the front door opening sealing strip 94, the front headroom sealing strip 95, the front inner water cut sealing strip 96, the front outer water cut sealing strip 97, the rear headroom sealing strip 99, the rear inner water cut sealing strip 991, and the rear outer water cut sealing strip 992 are all single sections. The present invention is simple in structure, integrity of the overall entire sealing system is excellent, and a universality degree of the system cross-section is high.

For the body sheet metal structure without a C-pillar, since the side wall sheet metal 5 has no seam allowance snap-fit sealing strip for the sheet metal 5 at the position corresponding to a C-pillar, the present invention selects a sealing strip with a new type of cross-sectional adopted at the position corresponding to a C-pillar of conventional vehicle models, and a metal guide rail 50 is integrated on a corner window for clamping and supporting, thereby achieving sealing among the sealing strip, an inner surface of glass, and a side surface of the glass. Not only is sealing requirement met, but also reduction of a size of an opaque area at a C-pillar position of conventional vehicle models (a model matched with the present invention has no C-pillar, herein, it means a position corresponding to a C-pillar of a conventional vehicle model) is realized.

Compared with an integral frameless door sealing system, the present invention has relatively fewer corners and cross-sections, better cost, and a higher universality degree of components; compared with a split frameless door sealing system, the present invention can be applied to body sheet metal without a C-pillar, with a smaller quantity of individual components and better component integrity. It does not need to consider the problem of wing angle collapse at extension of a C-pillar sealing strip, and small rounded corner turning can be achieved at the top of the position corresponding to a C-pillar, entry and exit performance for passengers is optimized, weight and cost of the entire vehicle are reduced, a width of a C-pillar is minimized, and an area of a visible area is optimized.

The present invention has a small quantity of components, good integrity, a simple cross-section, and a high degree of system generalization. It can be applied to vehicle body sheet metal structures without C-pillars, thereby reducing widths of C-pillars and optimizing visual effects. The sheet metal 5 has no C-pillar structure, and the interior has no C-pillar protective panel structure, thereby reducing the weight of the entire vehicle and lowering cost. Small rounded corner turning can be achieved at the top of the position corresponding to a C-pillar, which is conducive to entry and exit performance for passengers. At the position corresponding to a C-pillar, a gap between rear door glass and rear corner window glass is covered by a special sealing strip structure, thereby achieving a seamless appearance effect.

The present invention solves the problem that there is no clamping and supporting for the sheet metal 5 at the position corresponding to a C-pillar, reduces the width of the C-pillar, improves entry and exit performance for passengers through a rear door, reduces the weight of the entire vehicle, and lowers the cost of interior protective panels. The present invention has the advantages such as excellent sealing performance, good appearance visual effect and integrity, strong universality, a high degree of platformization, and so on, and has sufficient adaptability conditions for platform strategies with obvious trend.

### Embodiment 2

In combination with FIG. 5 to FIG. 12, the embodiment 2 provides a sealing device, which includes an injection molded element 60, a guide rail 50, and a sealing strip structure of the embodiment 1; wherein the injection molded element 60 is respectively connected to vehicle window glass 70 and the guide rail 50, the first snap-fit portion 21 of the sealing strip structure is clamped between the injection molded element 60 and the guide rail 50, the first stop portion 11 of the sealing strip structure abuts against the guide rail 50, the second snap-fit portion 22 of the sealing strip structure is snap-fitted to the guide rail 50.

In the embodiment 2, the first sealing strip of the sealing strip structure is respectively connected to the guide rail 50 and the injection molded element 60, so as to achieve connection between the first sealing strip and glass. Thus, the first sealing strip is mounted to a position corresponding to a C-pillar and needs not to be connected to sheet metal 5. The embodiment 2 can be applied to body sheet metal without a C-pillar.

In the embodiment 2, the sealing strip structure can be connected to glass through the guide rail 50 and the injection molded element 60, and the sealing structure needs not to be connected to the body sheet metal 5. The embodiment 2 can be applied to body sheet metal without a C-pillar. Based on FIG. 7, it can be known that a visible width of the position corresponding to a C-pillar is less than or equal to 50mm when using the embodiment 2, the width is small, and the visual effect is good.

An effect view of a visible area in a vehicle using body sheet metal with a C-pillar structure in the prior art is as shown in FIG. 11. When the embodiment 2 is applied to body sheet metal without a C-pillar structure, an effect view of a visible area in a vehicle at a position corresponding to a C-pillar is as shown in FIG. 12. Based on comparison between FIG. 11 and FIG. 12, it can be known that after using the embodiment 2, an area of a visible area can be obviously increased, and visual effect of the visible area is optimized.

Furthermore, the guide rail 50 includes a first clamping trough and a second clamping trough, the second snap-fit portion 22 is clamped in the first clamping trough, and the first snap-fit portion 21 is clamped between the injection molded element 60 and the second clamping trough; the first clamping trough comprises a first clamping board 511, a first connecting board 521, and a second clamping board 512, the first clamping board 511 is arranged at a first side of the first connecting board 521, the second clamping board 512 is arranged at a second side of the first connecting board 521, the first clamping board 511 is bent towards a first direction, the second clamping board 512 is bent towards a second direction, the first direction is opposite to the second direction; the second clamping trough comprises a second connecting board 522 and a third connecting board 523, the second connecting board 522 is arranged along the first direction, a first side of the second connecting board 522 is connected to the second clamping board 512, a second side of the second connecting board 522 is connected to the first side of the third connecting board 523, and an included angle is provided between the third connecting board 523 and the second connecting board 522.

In the embodiment 2, the second snap-fit portion 22 is clamped in the first clamping trough, the first bump 31 of the second snap-fit portion 22 is snap-fitted to the first clamping board 511 of the first clamping trough, and the second bump 32 is snap-fitted to the second clamping board 512 of the first clamping trough. The first snap-fitted portion 21 is clamped between the injection molded element 60 and the second clamping trough.

Furthermore, the included angle between the third connecting board 523 and the second connecting board 522 has an angle range of 90°~120°. In the embodiment 2, the angle range of the included angle is adapted to the first snap-fit portion 21 of the sealing strip, 90°≤the included angle≤120°.

Furthermore, the second connecting board 522 is provided with a protrusion 520 configured to stop the sealing strip. Furthermore, the first snap-fit portion 21 of the sealing strip is provided with the third bump 33, the third bump 33 is configured to be snap-fitted to the guide rail 50. In the embodiment 2, the first snap-fit portion 21 is snap-fitted to the protrusion 520 through the third bump 33, so as to further clamp the first snap-fit portion 21 to the guide rail 50.

Furthermore, the guide rail further includes a fourth connecting board 524, a first side of the fourth connecting board 524 is connected to a second side of the third connecting board 523, a second side of the fourth connecting board 524 abuts against the second clamping board 512, the second side of the second connecting board 522 abuts against the fourth connecting board 524, and the fourth connecting board 524 is connected to the injection molded element 60.

In the embodiment 2, the guide rail 50 is connected to the injection molded element 60 through the fourth connecting board 524. Preferably, the first clamping trough is also connected to the injection molded element 60 to further achieve firm connection between the guide rail 50 and the injection molded element 60.

Furthermore, the second side of the third connecting board 523 is bent towards the first direction and connected to the first side of the fourth connecting board 524, and the third connecting board 523 abuts against the fourth connecting board 524.

In the embodiment 2, being bent towards the first direction is being bent to the right side in the drawings, and being bent towards the second direction is being bent to the left side in the drawings.

Furthermore, the guide rail 50 is a roller forming guide rail 50.

For the body sheet metal structure without a C-pillar, since the side wall sheet metal 5 has no seam allowance snap-fit sealing strip for the sheet metal 5 at the position corresponding to a C-pillar, the present invention selects a sealing strip with a new type of cross-sectional adopted at the position corresponding to a C-pillar of conventional vehicle models, and a metal guide rail 50 is integrated on a corner window for clamping and supporting, thereby achieving sealing among the sealing strip, an inner surface of glass, and a side surface of the glass. Not only is sealing requirement met, but also reduction of a size of an opaque area at a C-pillar position of conventional vehicle models is realized.

Compared with an integral frameless door sealing system, the present invention has relatively fewer corners and cross-sections, better cost, and a higher universality degree of components; compared with a split frameless door sealing system, the present invention can be applied to body sheet metal without a C-pillar, with a smaller quantity of individual components and better component integrity. It does not need to consider the problem of wing angle collapse at extension of a C-pillar sealing strip, and small rounded corner turning can be achieved at the top of the position corresponding to a C-pillar, entry and exit performance for passengers is optimized, weight and cost of the entire vehicle are reduced, a width of a C-pillar is minimized, and an area of a visible area is optimized.

The present invention has a small quantity of components, good integrity, a simple cross-section, and a high degree of system generalization. It can be applied to vehicle body sheet metal structures without C-pillars, thereby reducing widths of C-pillars and optimizing visual effects. The sheet metal 5 has no C-pillar structure, and the interior has no C-pillar protective panel structure, thereby reducing the weight of the entire vehicle and lowering cost. Small rounded corner turning can be achieved at the top of the position corresponding to a C-pillar, which is conducive to entry and exit performance for passengers. At the position corresponding to a C-pillar, a gap between rear door glass and rear corner window glass is covered by a special sealing strip structure, thereby achieving a seamless appearance effect.

The present invention solves the problem that there is no clamping and supporting for the sheet metal 5 at the position corresponding to a C-pillar, reduces the width of the C-pillar, improves entry and exit performance for passengers through a rear door, reduces the weight of the entire vehicle, and lowers the cost of interior protective panels. The present invention has the advantages such as excellent sealing performance, good appearance visual effect and integrity, strong universality, a high degree of platformization, and so on, and has sufficient adaptability conditions for platform strategies with obvious trend.

The above are only preferred embodiments of the present invention, and are not intended to limit the present invention.

## Claims

1. A sealing strip structure comprising a first sealing strip, wherein the first sealing strip comprises a first stop portion (11), a second stop portion (12), a third stop portion (13), a first snap-fit portion (21), and a second snap-fit portion (22); the first stop portion (11), the second stop portion (12), and the third stop portion (13) are all configured to abut against a vehicle window glass (70); the first stop portion (11) is connected to the second stop portion (12), the first snap-fit portion (21) is connected to the first stop portion (11), and the first snap-fit portion (21) is configured to be connected to an injection molded element (60) and a guide rail (50); the second snap-fit portion (22) is respectively connected to the second stop portion (12) and the third stop portion (13), the second snap-fit portion (22) is configured to be snap-fitted to the guide rail (50), and the first stop portion (11) is further configured to abut against the guide rail (50); **characterized in that**
the sealing strip structure further comprises a second sealing strip; wherein the second sealing strip comprises a fourth stop portion (14), a third snap-fit portion (23), and a fourth snap-fit portion (24), the fourth stop portion (14) is configured to abut against the vehicle window glass (70), the third snap-fit portion (23) is provided with a snap-fit slot (230), the snap-fit slot (230) is configured to be snap-fitted to sheet metal (5); an opening of the snap-fit slot (230) is located at a first side of the third snap-fit portion (23), the fourth snap-fit portion (24) is connected to a second side of the third snap-fit portion (23) and bent towards the second side of the third snap-fit portion (23), a snap-fit cavity (40) is formed between the second side of the third snap-fit portion (23) and the fourth snap-fit portion (24), the snap-fit cavity (40) is configured to be snap-fitted to an interior panel.

2. The sealing strip structure according to claim 1, wherein a first side of the second snap-fit portion (22) is provided with a first bump (31), a second side of the second snap-fit portion (22) is provided with a second bump (32), the first side of the second snap-fit portion (22) and the second side of the second snap-fit portion (22) are arranged oppositely, and the first bump (31) and the second bump (32) are respectively configured to be snap-fitted to the guide rail (50).

3. The sealing strip structure according to claim 2, wherein the first side of the second snap-fit portion (22) is further provided with a recess groove (40), the recess groove (40) is configured to receive an end of the guide rail (50).

4. The sealing strip structure according to any one of claims 1-3, wherein the first snap-fit portion (21) is provided with a third bump (33), the third bump (33) is configured to be snap-fitted to the guide rail (50).

5. The sealing strip structure according to any one of claims 1-4, further comprising a third sealing strip; wherein the third sealing strip comprises a fifth stop portion (15), a sixth stop portion (16), and a fifth snap-fit portion (25); the fifth stop portion (15) is connected to the sixth stop portion (16), both the fifth stop portion (15) and the sixth stop portion (16) are configured to abut against the vehicle window glass (70); the fifth snap-fit portion (25) is connected to the fifth stop portion (15), the fifth snap-fit portion (25) is configured to be connected to the injection molded element (60), and the fifth stop portion (15) is further configured to abut against the injection molded element (60).

6. The sealing strip structure according to claim 5, wherein a first end of the first sealing strip is respectively connected to a first end of the second sealing strip and a first end of the third sealing strip; a second end of the first sealing strip is respectively connected to a second end of the second sealing strip and a second end of the third sealing strip.

7. A sealing device comprising an injection molded element (60), a guide rail (50), and a sealing strip structure according to any one of claims 1-6; wherein the injection molded element (60) is respectively connected to vehicle window glass (70) and the guide rail (50), the first snap-fit portion (21) of the sealing strip structure is clamped between the injection molded element (60) and the guide rail (50), the first stop portion (11) of the sealing strip structure abuts against the guide rail (50), the second snap-fit portion (22) of the sealing strip structure is snap-fitted to the guide rail (50).

8. The sealing device according to claim 7, wherein the guide rail (50) comprises a first clamping trough and a second clamping trough, the second snap-fit portion (22) is clamped in the first clamping trough, and the first snap-fit portion (21) is clamped between the injection molded element (60) and the second clamping trough; the first clamping trough comprises a first clamping board (511), a first connecting board (521), and a second clamping board (512), the first clamping board (511) is arranged at a first side of the first connecting board (521), the second clamping board (512) is arranged at a second side of the first connecting board (521), the first clamping board (511) is bent towards a first direction, the second clamping board (512) is bent towards a second direction, the first direction is opposite to the second direction; the second clamping trough comprises a second connecting board (522) and a third connecting board (523), the second connecting board (522) is arranged along the first direction, a first side of the second connecting board (522) is connected to the second clamping board (512), a second side of the second connecting board (522) is connected to the first side of the third connecting board (523), and an included angle is provided between the third connecting board (523) and the second connecting board (522).

9. The sealing device according to claim 8, wherein the guide rail (50) further comprises a fourth connecting board (524), a first side of the fourth connecting board (524) is connected to a second side of the third connecting board (523), a second side of the fourth connecting board (524) abuts against the second clamping board (512), the second side of the second connecting board (522) abuts against the fourth connecting board (524), and the fourth connecting board (524) is connected to the injection molded element (60).

## Patentansprüche

1. Dichtungsleistenstruktur, umfassend eine erste Dichtungsleiste, wobei die erste Dichtungsleiste einen ersten Anlageabschnitt (11), einen zweiten Anlageabschnitt (12), einen dritten Anlageabschnitt (13), einen ersten Schnappabschnitt (21) und einen zweiten Schnappabschnitt (22) umfasst, wobei der erste Anlageabschnitt (11), der zweite Anlageabschnitt (12) und der dritte Anlageabschnitt (13) sämtlich dazu eingerichtet sind, an einer Fahrzeugscheibe (70) anzuliegen, wobei der erste Anlageabschnitt (11) mit dem zweiten Anlageabschnitt (12) verbunden ist, wobei der erste Schnappabschnitt (21) mit dem ersten Anlageabschnitt (11) verbunden ist, wobei der erste Schnappabschnitt (21) dazu eingerichtet ist, mit einem spritzgegossenen Element (60) und einer Führungsschiene (50) verbunden zu werden, wobei der zweite Schnappabschnitt (22) jeweils mit dem zweiten Anlageabschnitt (12) und dem dritten Anlageabschnitt (13) verbunden ist, wobei der zweite Schnappabschnitt (22) dazu eingerichtet ist, an der Führungsschiene (50) einrastend befestigt zu werden, und wobei der erste Anlageabschnitt (11) ferner dazu eingerichtet ist, an der Führungsschiene (50) anzuliegen; **dadurch gekennzeichnet, dass**
die Dichtungsleistenstruktur ferner eine zweite Dichtungsleiste umfasst, wobei die zweite Dichtungsleiste einen vierten Anlageabschnitt (14), einen dritten Schnappabschnitt (23) und einen vierten Schnappabschnitt (24) umfasst, wobei der vierte Anlageabschnitt (14) dazu eingerichtet ist, an der Fahrzeugscheibe (70) anzuliegen, wobei der dritte Schnappabschnitt (23) mit einem Schnappschlitz (230) versehen ist, wobei der Schnappschlitz (230) dazu eingerichtet ist, an einem Blech (5) einrastend befestigt zu werden, wobei sich eine Öffnung des Schnappschlitzes (230) an einer ersten Seite des dritten Schnappabschnitts (23) befindet, wobei der vierte Schnappabschnitt (24) mit einer zweiten Seite des dritten Schnappabschnitts (23) verbunden und in Richtung der zweiten Seite des dritten Schnappabschnitts (23) gebogen ist, wobei ein Schnapphohlraum (40) zwischen der zweiten Seite des dritten Schnappabschnitts (23) und dem vierten Schnappabschnitt (24) ausgebildet ist, wobei der Schnapphohlraum (40) dazu eingerichtet ist, an einem Innenverkleidungsteil einrastend befestigt zu werden.

2. Dichtungsleistenstruktur nach Anspruch 1, wobei eine erste Seite des zweiten Schnappabschnitts (22) mit einer ersten Erhebung (31) versehen ist, wobei eine zweite Seite des zweiten Schnappabschnitts (22) mit einer zweiten Erhebung (32) versehen ist, wobei die erste Seite des zweiten Schnappabschnitts (22) und die zweite Seite des zweiten Schnappabschnitts (22) einander gegenüberliegend angeordnet sind, und wobei die erste Erhebung (31) sowie die zweite Erhebung (32) jeweils dazu eingerichtet sind, an der Führungsschiene (50) einrastend befestigt zu werden.

3. Dichtungsleistenstruktur nach Anspruch 2, wobei die erste Seite des zweiten Schnappabschnitts (22) ferner mit einer Ausnehmungsnut (40) versehen ist, wobei die Ausnehmungsnut (40) dazu eingerichtet ist, ein Ende der Führungsschiene (50) aufzunehmen.

4. Dichtungsleistenstruktur nach einem der Ansprüche 1 bis 3, wobei der erste Schnappabschnitt (21) mit einer dritten Erhebung (33) versehen ist, wobei die dritte Erhebung (33) dazu eingerichtet ist, an der Führungsschiene (50) einrastend befestigt zu werden.

5. Dichtungsleistenstruktur nach einem der Ansprüche 1 bis 4, ferner umfassend eine dritte Dichtungsleiste, wobei die dritte Dichtungsleiste einen fünften Anlageabschnitt (15), einen sechsten Anlageabschnitt (16) und einen fünften Schnappabschnitt (25) umfasst, wobei der fünfte Anlageabschnitt (15) mit dem sechsten Anlageabschnitt (16) verbunden ist, wobei sowohl der fünfte Anlageabschnitt (15) als auch der sechste Anlageabschnitt (16) dazu eingerichtet sind, an der Fahrzeugscheibe (70) anzuliegen, wobei der fünfte Schnappabschnitt (25) mit dem fünften Anlageabschnitt (15) verbunden ist, wobei der fünfte Schnappabschnitt (25) dazu eingerichtet ist, mit dem spritzgegossenen Element (60) verbunden zu werden, und wobei der fünfte Anlageabschnitt (15) ferner dazu eingerichtet ist, an dem spritzgegossenen Element (60) anzuliegen.

6. Dichtungsleistenstruktur nach Anspruch 5, wobei ein erstes Ende der ersten Dichtungsleiste jeweils mit einem ersten Ende der zweiten Dichtungsleiste und einem ersten Ende der dritten Dichtungsleiste verbunden ist, wobei ein zweites Ende der ersten Dichtungsleiste jeweils mit einem zweiten Ende der zweiten Dichtungsleiste und einem zweiten Ende der dritten Dichtungsleiste verbunden ist.

7. Dichtungsvorrichtung, umfassend ein spritzgegossenes Element (60), eine Führungsschiene (50) und eine Dichtungsleistenstruktur nach einem der Ansprüche 1 bis 6; wobei das spritzgegossene Element (60) jeweils mit der Fahrzeugscheibe (70) und der Führungsschiene (50) verbunden ist, wobei der erste Schnappabschnitt (21) der Dichtungsleistenstruktur zwischen dem spritzgegossenen Element (60) und der Führungsschiene (50) eingespannt ist, wobei der erste Anlageabschnitt (11) der Dichtungsleistenstruktur an der Führungsschiene (50) anliegt, wobei der zweite Schnappabschnitt (22) der Dichtungsleistenstruktur an der Führungsschiene (50) einrastend befestigt ist.

8. Dichtungsvorrichtung nach Anspruch 7, wobei die Führungsschiene (50) eine erste Klemmnut und eine zweite Klemmnut umfasst, wobei der zweite Schnappabschnitt (22) in der ersten Klemmnut eingespannt ist und der erste Schnappabschnitt (21) zwischen dem spritzgegossenen Element (60) und der zweiten Klemmnut eingespannt ist, wobei die erste Klemmnut eine erste Klemmplatte (511), eine erste Verbindungsplatte (521) und eine zweite Klemmplatte (512) umfasst, wobei die erste Klemmplatte (511) an einer ersten Seite der ersten Verbindungsplatte (521) angeordnet ist, wobei die zweite Klemmplatte (512) an einer zweiten Seite der ersten Verbindungsplatte (521) angeordnet ist, wobei die erste Klemmplatte (511) in eine erste Richtung gebogen ist, wobei die zweite Klemmplatte (512) in eine zweite Richtung gebogen ist, wobei die erste Richtung der zweiten Richtung entgegengesetzt ist, wobei die zweite Klemmnut eine zweite Verbindungsplatte (522) und eine dritte Verbindungsplatte (523) umfasst, wobei die zweite Verbindungsplatte (522) entlang der ersten Richtung angeordnet ist, wobei eine erste Seite der zweiten Verbindungsplatte (522) mit der zweiten Klemmplatte (512) verbunden ist, wobei eine zweite Seite der zweiten Verbindungsplatte (522) mit der ersten Seite der dritten Verbindungsplatte (523) verbunden ist, und wobei zwischen der dritten Verbindungsplatte (523) und der zweiten Verbindungsplatte (522) ein eingeschlossener Winkel vorgesehen ist.

9. Dichtungsvorrichtung nach Anspruch 8, wobei die Führungsschiene (50) ferner eine vierte Verbindungsplatte (524) umfasst, wobei eine erste Seite der vierten Verbindungsplatte (524) mit einer zweiten Seite der dritten Verbindungsplatte (523) verbunden ist, wobei eine zweite Seite der vierten Verbindungsplatte (524) an der zweiten Klemmplatte (512) anliegt, wobei die zweite Seite der zweiten Verbindungsplatte (522) an der vierten Verbindungsplatte (524) anliegt, und wobei die vierte Verbindungsplatte (524) mit dem spritzgegossenen Element (60) verbunden ist.

## Revendications

1. Structure de lisière à calfeutrer comprenant une première lisière à calfeutrer, dans laquelle la première lisière à calfeutrer comprend une première partie d'arrêt (11), une deuxième partie d'arrêt (12), une troisième partie d'arrêt (13), une première partie d'encliquetage (21) et une deuxième partie d'encliquetage (22) ; la première partie d'arrêt (11), la deuxième partie d'arrêt (12) et la troisième partie d'arrêt (13) sont toutes conçues pour venir en butée contre une vitre de véhicule (70) ; la première partie d'arrêt (11) est reliée à la deuxième partie d'arrêt (12), la première partie d'encliquetage (21) est reliée à la première partie d'arrêt (11), et la première partie d'encliquetage (21) est conçue pour être reliée à un élément moulé par injection (60) et à un rail de guidage (50) ; la deuxième partie d'encliquetage (22) est respectivement reliée à la deuxième partie d'arrêt (12) et à la troisième partie d'arrêt (13), la deuxième partie d'encliquetage (22) est conçue pour être encliquetée sur le rail de guidage (50), et la première partie d'arrêt (11) est en outre conçue pour venir en butée contre le rail de guidage (50) ; **caractérisée en ce que**
la structure de lisière à calfeutrer comprend en outre une deuxième lisière à calfeutrer ; dans laquelle la deuxième lisière à calfeutrer comprend une quatrième partie d'arrêt (14), une troisième partie d'encliquetage (23) et une quatrième partie d'encliquetage (24), la quatrième partie d'arrêt (14) est conçue pour venir en butée contre la vitre de véhicule (70), la troisième partie d'encliquetage (23) est pourvue d'une fente d'encliquetage (230), la fente d'encliquetage (230) est conçue pour être encliquetée sur une tôle (5) ; une ouverture de la fente d'encliquetage (230) est située au niveau d'un premier côté de la troisième partie d'encliquetage (23), la quatrième partie d'encliquetage (24) est reliée à un second côté de la troisième partie d'encliquetage (23) et courbée vers le second côté de la troisième partie d'encliquetage (23), une cavité d'encliquetage (40) est formée entre le second côté de la troisième partie d'encliquetage (23) et la quatrième partie d'encliquetage (24), la cavité d'encliquetage (40) est conçue pour être encliquetée sur un panneau interne.

2. Structure de lisière à calfeutrer selon la revendication 1, dans laquelle un premier côté de la deuxième partie d'encliquetage (22) est pourvu d'une première bosse (31), un second côté de la deuxième partie d'encliquetage (22) est pourvu d'une deuxième bosse (32), le premier côté de la deuxième partie d'encliquetage (22) et le second côté de la deuxième partie d'encliquetage (22) sont disposés de manière opposée, et la première bosse (31) et la deuxième bosse (32) sont respectivement conçues pour être encliquetées sur le rail de guidage (50).

3. Structure de lisière à calfeutrer selon la revendication 2, dans laquelle le premier côté de la deuxième partie d'encliquetage (22) est en outre pourvu d'une rainure d'évidement (40), la rainure d'évidement (40) est conçue pour recevoir une extrémité du rail de guidage (50).

4. Structure de lisière à calfeutrer selon l'une quelconque des revendications 1 à 3, dans laquelle la première partie d'encliquetage (21) est pourvue d'une troisième bosse (33), la troisième bosse (33) est conçue pour être encliquetée sur le rail de guidage (50).

5. Structure de lisière à calfeutrer selon l'une quelconque des revendications 1 à 4, comprenant en outre une troisième lisière à calfeutrer ; dans laquelle la troisième lisière à calfeutrer comprend une cinquième partie d'arrêt (15), une sixième partie d'arrêt (16) et une cinquième partie d'encliquetage (25) ; la cinquième partie d'arrêt (15) est reliée à la sixième partie d'arrêt (16), la cinquième partie d'arrêt (15) et la sixième partie d'arrêt (16) sont toutes deux conçues pour venir en butée contre la vitre de véhicule (70) ; la cinquième partie d'encliquetage (25) est reliée à la cinquième partie d'arrêt (15), la cinquième partie d'encliquetage (25) est conçue pour être reliée à l'élément moulé par injection (60), et la cinquième partie d'arrêt (15) est en outre conçue pour venir en butée contre l'élément moulé par injection (60).

6. Structure de lisière à calfeutrer selon la revendication 5, dans laquelle une première extrémité de la première lisière à calfeutrer est respectivement reliée à une première extrémité de la deuxième lisière à calfeutrer et à une première extrémité de la troisième lisière à calfeutrer ; une seconde extrémité de la première lisière à calfeutrer est respectivement reliée à une seconde extrémité de la deuxième lisière à calfeutrer et à une seconde extrémité de la troisième lisière à calfeutrer.

7. Dispositif de calfeutrage comprenant un élément moulé par injection (60), un rail de guidage (50) et une structure de lisière à calfeutrer selon l'une quelconque des revendications 1 à 6 ; dans lequel l'élément moulé par injection (60) est respectivement relié à la vitre de véhicule (70) et au rail de guidage (50), la première partie d'encliquetage (21) de la structure de lisière à calfeutrer est serrée entre l'élément moulé par injection (60) et le rail de guidage (50), la première partie d'arrêt (11) de la structure de lisière à calfeutrer vient en butée contre le rail de guidage (50), la deuxième partie d'encliquetage (22) de la structure de lisière à calfeutrer est encliquetée sur le rail de guidage (50).

8. Dispositif de calfeutrage selon la revendication 7, dans lequel le rail de guidage (50) comprend une première auge de serrage et une seconde auge de serrage, la deuxième partie d'encliquetage (22) est serrée dans la première auge de serrage, et la première partie d'encliquetage (21) est serrée entre l'élément moulé par injection (60) et la seconde auge de serrage ; la première auge de serrage comprend une première plaque de serrage (511), une première plaque de liaison (521) et une seconde plaque de serrage (512), la première plaque de serrage (511) est disposée sur un premier côté de la première plaque de liaison (521), la seconde plaque de serrage (512) est disposée sur un second côté de la première plaque de liaison (521), la première plaque de serrage (511) est courbée vers une première direction, la seconde plaque de serrage (512) est courbée vers une seconde direction, la première direction est opposée à la seconde direction ; la seconde auge de serrage comprend une deuxième plaque de liaison (522) et une troisième plaque de liaison (523), la deuxième plaque de liaison (522) est disposée le long de la première direction, un premier côté de la deuxième plaque de liaison (522) est relié à la seconde plaque de serrage (512), un second côté de la deuxième plaque de liaison (522) est relié au premier côté de la troisième plaque de liaison (523), et un angle inclus est prévu entre la troisième plaque de liaison (523) et la deuxième plaque de liaison (522).

9. Dispositif de calfeutrage selon la revendication 8, dans lequel le rail de guidage (50) comprend en outre une quatrième plaque de liaison (524), un premier côté de la quatrième plaque de liaison (524) est relié à un second côté de la troisième plaque de liaison (523), un second côté de la quatrième plaque de liaison (524) vient en butée contre la seconde plaque de serrage (512), le second côté de la deuxième plaque de liaison (522) vient en butée contre la quatrième plaque de liaison (524), et la quatrième plaque de liaison (524) est reliée à l'élément moulé par injection (60).
